# EUROPÄISCHE PATENTANMELDUNG

(11) **EP 1 186 819 A1**
(43) Veröffentlichungstag der Anmeldung: **13.03.2002**
(21) Anmeldenummer: 00810812.8
(22) Anmeldetag: 08.09.2000
(51) Int. Cl.: F16L 11/08

(54) **Flexible Hochdruckleitung**

(71) Anmelder: ABB RESEARCH LTD., 8050 Zürich (CH)
(72) Erfinder: Mahieux, Celine Dr., 5400 Baden (CH); Meier, Guido, 5303 Würenlingen (CH)
(74) Vertreter: ABB Patent Attorneys

(57) **Zusammenfassung**

Flexible Hochdruckleitung (10), insbesondere Riser zur Förderung von Fluiden aus Unterwasserquellen, mit aneinander anliegenden, konzentrischen Layern (12, 14, 20, 24, 26), die gegeneinander verschiebbar sind. Der äusserste Layer (14) und der innerste Layer (12) bestehen aus flüssigkeitsundurchlässigem Kunststoff. Dazwischen ist wenigstens ein eine Schicht (16) zur Aufnahme von radialen Druckkräften vorgesehen, welche wenigstens einen Drucklayer (20) mit spiralförmig um die Längsachse (22) der Hochdruckleitung (10) verlaufender Struktur aufweist. Zur Aufnahme von longitudinal wirkenden Kräften ist eine Schicht (18) mit einem Axiallayer (24) vorgesehen. Axiallayer (24) und Drucklayer (20) sind durch einen Reibungslayer (26) getrennt. Alle Layer (12, 14, 20, 24, 26) bestehen ausschliesslich aus Polymermaterial und/oder faserverstärktem Polymermaterial.

## Beschreibung

### Technisches Gebiet

Die Erfindung betrifft eine flexible Hochdruckleitung, insbesondere einen Riser zur Förderung von Fluiden aus Unterwasserquellen, mit aneinander anliegenden, konzentrischen Layern gemäss dem Oberbegriff des Patentanspruches 1.

### Stand der Technik

Derartige Hochdruckleitungen werden beispielsweise bei der Offshore-Ölgewinnung eingesetzt. Dabei verbindet die flexible Hochdruckleitung als Riser z.B. eine Tiefseeölquelle in über 1000m Tiefe mit einer Ölplattform oder einem Bohrschiff. Die Anforderungen an eine solche Hochdruckleitung sind vielfältig. Die Hochdruckleitung muss zum einen sehr flexibel sein, da sie zum Transport und Gebrauch immer wieder auf Trommeln auf- und von diesen abgerollt wird. Zum anderen muss sie hohen radialen Drücken standhalten, da die geförderten Fluide (Gas, Öl, Wasser etc.) mit hohen Drücken durch die Leitung gefördert werden. Ausserdem wirkt bei entsprechenden Wassertiefen auch von aussen ein hoher Druck radial auf die Leitung, unter dem die Leitung nicht Kollabieren darf. Um diesen hohen Anforderungen an Flexibilität und Druckbeständigkeit zu genügen, enthalten die bekannten Hochdruckleitungen Stahl- oder andere Metallstrukturen, die ihnen die nötige Festigkeit bei ausreichender Flexibilität verleihen. Neben den Metalllagen weisen solche Hochdruckleitungen meist noch verschiedene Kunststofflagen auf, die für den Schutz der Metallschichten vor Korrosion und vor Verschleiss sorgen und zur Abdichtung der Hochdruckleitung gegen innen und aussen dienen. Metall- und Kunststofflagen, auch Layer genannt, können fest miteinander verbunden oder gegeneinander verschiebbar sein.

Ein Beispiel für eine solche Hochdruckleitung ist in der US-4,706,713 beschrieben. Ein innerer Kunststofflayer bildet mit einer Stahlröhre eine erste innere Verbundschicht. Die Verbundschicht ist umwickelt mit zwei Lagen Metallstreifen, die miteinander verzahnt sind und den radialen Druck des durch die Leitung geförderten Fluids aufnehmen. Die verzahnten Metallstreifen sind ihrerseits mit zwei Lagen gegeneinander verschiebbarer Metallstreifen umwickelt, die einander entgegengesetzte Wickelrichtungen aufweisen. Diese zwei Metalllayer nehmen den in Längsrichtung der Leitung wirkenden Druck des durch die Leitung geförderten Fluids auf. Ein äusserer Kunststofflayer dient als Schutzmantel.

Ein grosses Problem bei solchen Hochdruckleitungen zur Förderung von Fluiden aus grossen Wassertiefen, besteht in ihrem Eigengewicht. Bei grösseren Längen der Leitungen führt das hohe Eigengeweicht zum Kriechen und schliesslich zum Versagen der Leitung. Um dieses Problem in den Griff zu bekommen, werden die Hochdruckleitung mit Hilfe von Bojen und ähnlichen Schwimmkörpern von ihrem Gewicht entlastet. Dies bedeutet aber einen zusätzlichen Transport- und Montageaufwand.

Es gibt auch Hochdruckleitungen mit integrierten Schwimmkörpern, wie sie beispielsweise aus der DE-A1-25 54 432 bekannt sind. Der Kern der offenbarten Hochdruckleitung besteht aus einem Polymermaterial. Um das Eigengewicht auszugleichen, ist der Kern mit luftgefüllten Kammern in Form von spiralförmig um die Längsachse der Leitung gewickelte Luftröhren versehen. Ein spiralförmig gewickelter Metalldraht sorgt für die nötige Steifigkeit und Stabilität, bei Verwendung der Hochdruckleitung unter hohen Drücken wie sie z.B. bei der Ölförderung auftreten.

Auch In der US-4, 850, 395 ist eine flexible und vergleichsweise leichte Hochdruckleitung offenbart: Um einen Kernröhre aus Kunststoff sind, diese zu 100% bedekkend, spiralförmig und in entgegengesetzten Richtungen zwei Lagen Kevlar gewikkelt, welche den radialen Druck aufnehmen. Um Verschleiss zwischen den Kevlarlayern zu verhindern ist ein Urethanbeschichtetes Gewebe zwischen die Layer eingebracht. Nach einem äusseren Zwischenlayer aus Kunststoff sind spiralförmig und in entgegengesetzten Richtungen zwei Lagen Stahldrähte aufgewickelt, welche axiale bzw. longitudinal wirkende Kräfte aufnehmen. Sie bedecken den Zwischenlayer nahezu vollständig, d.h. etwa zu 98%. Als Mantel ist nach einem weiteren Zwischenlayer ein Schutzlayer aus Kunststoff gegen Feuchtigkeit und Korrosion, UV-Strahlen, Stösse, Schnitte und Verschleiss vorgesehen. Der weitere Zwischenlayer verhindert dass der Schutzmantel beim Biegen der Hochdruckleitung zwischen den aufgewickelten Stahldrähten eingeklemmt wird.

### Darstellung der Erfindung

Durch die stützenden, die Festigkeit und Steifigkeit erhöhenden Metallstrukturen bleiben all diese Hochdruckleitung in ihrer Grundstruktur relativ schwer, auch wenn dies mit schwimmkörperartigen Strukturen z.T. wieder ausgeglichen wird. Derartige Leitungen werden daher nur in begrenzten Längen von maximal ein paar Hundert Metern hergestellt. Bei zu überbrückenden Distanzen von bis zu 2000m bis 3000m, beispielsweise bei der Tiefsee-Ölgewinnung, bedeutet dies einen entsprechenden Montageaufwand und ein erhöhtes Risiko für Leckagen. Auch bergen diese Metallstrukturen aufgrund ihrer Korrosionsanfälligkeit ein erhöhtes Risiko, wenn der äussere Schutzlayer der Hochdruckleitung oder auch des inneren abdichtenden Layers verletzt wird. Die begrenzte Flexibilität führt bei häufigem Auf- und Abrollen von ihren Trommeln zu Materialermüdung in den Hochdruckleitungen und verringert ihre Lebensdauer.

Es ist deshalb Aufgabe der Erfindung, eine Hochdruckleitung der eingangs genannten Art zu schaffen, welche die oben genannten Nachteile behebt.

Diese Aufgabe löst eine Hochdruckleitung mit den Merkmalen des Patentanspruches 1.

In der erfindungsgemässen Hochdruckleitung sind alle Layer aus Polymermaterial und/oder faserverstärktem Polymermaterial gefertigt. Das macht die Hochdruckleitung gegenüber einer Leitung mit metallischen Strukturen leichter und schliesst das korrosionsbedingte Versagen im Falle einer Verletzung des Schutzmantels der Hochdruckleitung aus. Aufgrund des geringeren Eigengewichtes ist es möglich Hochdruckleitungen grösserer Längen bis zu über 10 000 Meter herzustellen ohne die Gefahr eines Kollabierens oder Kriechens der Leitung.

Vorteilhafter ist es, wenn eine die radialen Drücke aufnehmende Schicht mindestens einen aus faserverstärktem Kunststoff hergestellten Drucklayer aufweist und eine die axialen Kräfte aufnehmende Schicht mindestens einen aus faserverstärktem Kunststoff hergestellten Axiallayer aufweist. Drucklayer und Axiallayer sind speziell für ihre jeweilige Aufgabe designed. Sie können die auftretenden Kräfte problemlos aufnehmen, wodurch die Hochdruckleitung die nötige Festigkeit erhält. Die Schichten aus den Layern sind sehr leicht und flexibel. Dadurch dass sich die einzelnen Layer gegeneinander verschieben können, wird eine ausgezeichnete Biegsamkeit erreicht und die Hochdruckleitung kann auch auf Trommeln mit vergleichsweise kleinen Durchmessern aufgewickelt werden ohne dass es zu Rissen und Brüchen in den Kunststofflayern kommt. Die besten Resultate bezüglich Biegsamkeit der Hochdruckleitung sowie Zugfestigkeit usw. werden mit kontinuierlichen Verstärkungsfasern erreicht.

Für die Drucklayer, welche die radialen Druckkräfte sowohl von dem in der Leitung mit Hochdruck geförderten Fluid als auch den von aussen auf die Leitung wirkenden radialen Druck z.B. der Wassersäule, aufnehmen, ist es besonders vorteilhaft, Kohlefasern zu verwenden, da diese bei geringer Dichte eine hohe Zugfestigkeit aufweisen. Ihr Volumenanteil liegt mit Vorteil bei 45% bis 65

Für die Axiallayer, welche die axialen, also in Längsrichtung der Hochdruckleitung wirkenden Kräfte aufnehmen, ist es besonders vorteilhaft, Glasfasern oder Aramidfasern zu verwenden, da diese bei geringer Dichte eine hohe Duktilität bei guter Zugfestigkeit und axialer Steifigkeit aufweisen. Besonders günstige Eigenschaften erhalten die Layer mit einem Volumenanteil der Fasern von 30% bis 50%.

Sind die Verstärkungsfasern in den Drucklayern in einem Steigungswinkel von 0° bis 30 um die Längsachse der Hochdruckleitung aufgewickelt, so können die radialen Druckkräfte bestens von den Fasern in den Drucklayern aufgenommen werden. Die Verstärkungsfasern in den Axiallayern werden zu einer optimalen Aufnahme der axial wirkenden Kräfte am besten mit einem Steigungswinkel von 45 bis 90° um die Längsachse der Hochdruckleitung angeordnet.

Die höchste Flexibilität wird erreicht, wenn zwei Drucklayer mit spiralförmig angeordneten Verstärkungsfasern verwendet werden, die in Form von Springfedern mit gegenläufigen spiralem Drehsinn ausgebildet sind. Am einfachsten lassen sich diese Spiralspringfedern herstellen, indem Prepregbänder in Form der Spiralspringfeder mit einem entsprechenden Steigungswinkel gewickelt werden. Eine andere ebenfalls sehr einfache Herstellung ist es die Spiralspringfedern aus kompakten Drucklayerzylindern mit einem Hochdruckwasserstrahl auszuschneiden. Die kompakten Drucklayerzylinder können sehr einfach z.B. durch Aufwickeln von Prepregbändern hergestellt werden. Die Verstärkungsfasern der Drucklayer haben für diese Ausgestaltung abhängig von dem zu erwartenden radialen Druck einen Steigungswinkel von 0° bis 30°. Für hohe radiale Drücke am besten 2°. Für geringere radiale Drücke und grosse Biegsamkeit eher grössere Steigungswinkel bis 30°. Der Steigungswinkel der ausgeschnittenen Spiralspringfedern ist vorzugsweise gleich dem Steigungswinkel der Verstärkungsfasern, damit letztere nicht geschnitten werden müssen.

Für den Einsatz bei Temperaturen bis 90°C wird als Matrix, in welche die Verstärkungsfasern der Drucklayer und Axiallayer eingebettet sind ein Thermoplast, besonders vorteilhaft PE oder PEEK verwendet. Die thermoplastische Matrix weist zusammen mit den Verstärkungsfasern die gewünschten Eigenschaften auf und ist sehr günstiger in der Verarbeitung.

Für Temperaturen bis 180°C-200°C wird als Matrix ein Epoxydharz verwendet. Bei ähnlich guter Biegsamkeit und Zugfestigkeit wie der thermoplastischen Matrix lässt sich mit der Epoxymatrix eine höhere Temperaturstabilität erreichen.

Weitere bevorzugte Ausführungsformen sind Gegenstand weiterer abhängiger Patentansprüche.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen rein schematisch:
- Figur 1: ein erstes Ausführungsbeispiel der erfindungsgemässen Hochdruckleitung, wobei die einzelnen Layer in der unteren Hälfte in freiliegendem Zustand und in der oberen Hälfte im Schnitt entlang der Längsachse gezeigt sind;
- Figur 2: ein zweites Ausführungsbeispiel der erfindungsgemässen Hochdruckleitung in einer Darstellung analog zu der in Fig. 1; und
- Figur 3: ein drittes Ausführungsbeispiel der erfindungsgemässen Hochdruckleitung in einer Darstellung analog zu der in Fig. 1.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebene Ausführungsform steht beispielhaft für den Erfindungsgegenstand und hat keine beschränkende Wirkung.

### Wege zur Ausführung der Erfindung

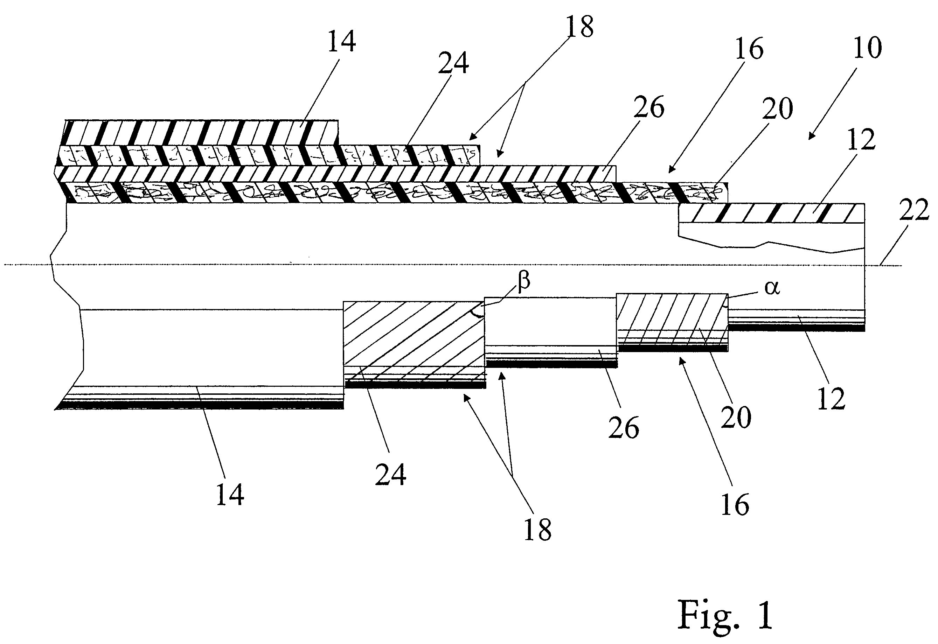

Die Figuren 1 bis 3 zeigen jeweils ein Ausführungsbeispiel einer erfindungsgemässen Hochdruckleitung 10, 10', 10" mit einem innersten Layer 12 aus Polymermaterial zur Fluidabdichtung gegen aussen und einem äussersten Layer 14 aus Polymermaterial zum Schutz gegen Eindringen von Flüssigkeiten oder Gasen in die Hochdruckleitung und gegen Stösse, Kratzer, Schnitte und ähnliches. Der als Innenrohr ausgebildete innerste Layer 12 und der als Schutzmantel ausgebildete äusserste Layer 14 sind, in bekannter Weise z.B. aus einem Thermoplasten wie PE, HDPE, Nylon oder ähnlichem gefertigt. Zwischen dem Innenrohr 12 und dem Schutzmantel 14 sind eine Schicht 16 zur Aufnahme des radialen Druckes und eine Schicht 18 zur Aufnahme der in Längsrichtung der Hochdruckleitung auftretende Kräfte vorgesehen.

In dem in der Figur 1 gezeigten Ausführungsbeispiel besteht die den radialen Druck aufnehmende Schicht 16 aus einem Drucklayer 20, der aus Prepregs mit kontinuierlichen Kohlfasern, eingebettet in einer PEEK-Matrix gefertigt ist. Der Kohlefaseranteil beträgt 65% des Volumens des Drucklayers 20. Der Steigungswinkel α mit dem die Kohlefasern um die Längsachse 22 der Hochdruckleitung 10 gewickelt sind, beträgt 25°. Die Schicht 18, welche die axial wirkenden Kräfte aufnimmt, ist weiter aussen angeordnet als die druckaufnehmende Schicht 16. Sie weist einen Axiallayer 24 und einen Reibungslayer 26 auf. Der Axiallayer 24 ist aus Prepregs hergestellt, die eine PEEK-Matrix mit darin eingebetteten kontinuierlichen Glasfasern aufweisen. Der Glasfaseranteil des Axiallayers 24 liegt bei etwa 45% des Volumens. Die Glasfasern sind in einem Steigungswinkel β von 55° um die Längsachse der Hochdruckleitung gewickelt. Der Reibungslayer 26 der Schicht 18 ist aus den üblicher Weise verwendeten Materialen wie z.B. aus einem mit PU-überzogenen Nylongewebe hergestellt und als Verschleissschutz zwischen dem faserverstärkten Axiallayer 24 und dem faserverstärkten Drucklayer 20 angeordnet.

Die Länge einer solchen Hochdruckleitung 10 kann etwa die 1000m betragen. Ihr spezifisches Gewicht ist leichter als dasjenige on Wasser, so dass sie schwimmt. Geeignet ist diese Hochdruckleitung 10 zur Förderung von Fluiden wie Gas, Öl oder Wasser mit Temperaturen bis zu etwa 90° aus Tiefen bis zu 2000m bis 3000m.

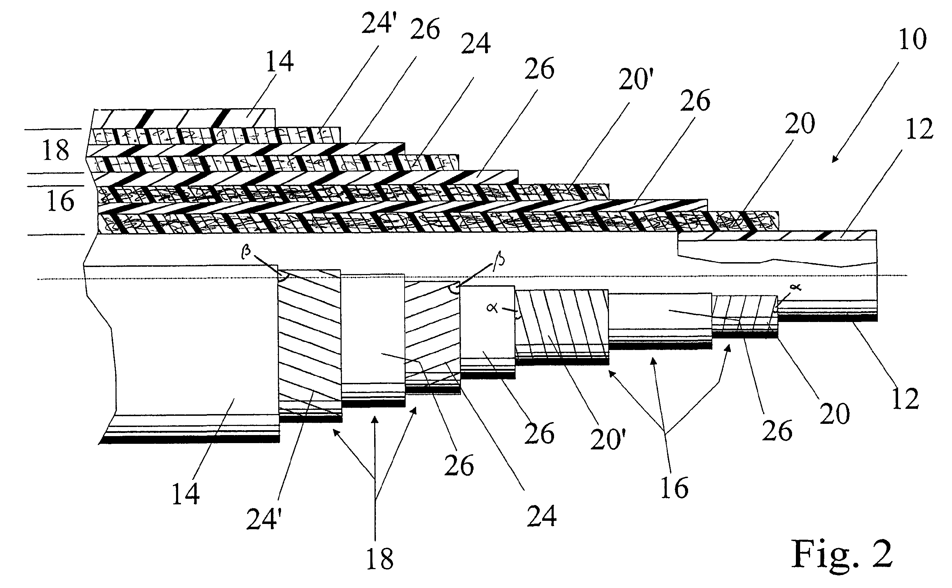

Figur 2 zeigt eine Hochdruckleitung 10', bei der in der druckaufnehmenden Schicht 16 zwei Drucklayer 20, 20' vorgesehen sind. Die Drucklayer 20, 20' weisen eine gegenläufige spiralförmige Struktur der kontinuierlichen Kohlefasern mit einem Steigungswinkel α von 15° bzw. -15° auf, der Kohlefaseranteil beträgt 45% des Volumens. Eingebettet sind die Kohlefasern in eine Matrix aus Epoxydharz. Zwischen den Drucklayern 20, 20' ist ein Reibungslayer 26 der bekannten Art angeordnet. Die Schicht 18, welche longitudinal wirkende Kräfte aufnimmt, weist zwei Axiallayer 24, 24' auf, die durch einen Reibungslayer 26 der bekannten Art getrennt sind. Die Axiallayer 24 weisen ebenfalls eine gegenläufige spiralförmige Struktur auf. Der Steigungswinkel β beträgt 70° bzw. -70°. Die Axiallayer 24, 24' bestehen aus einer Epoxydharz-Matrix, in die kontinuierliche Glasfasern eingebettet sind. Der Volumenanteil der Glasfasern liegt bei etwa 30%. Zwischen den beiden Schichten 16, 18 ist wiederum ein Reibungslayer angeordnet.

Mit einer derartigen Hochdruckleitung 10' können Fluide, wie Gas, Öl, Wasser mit Temperaturen bis zu 160°C aus grossen Tiefen gefördert werden.

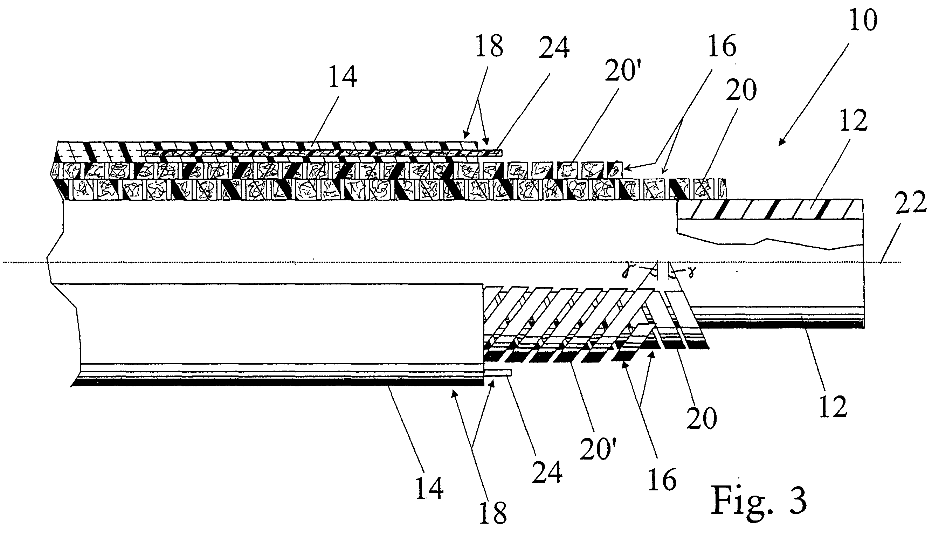

Das in Fig. 3 gezeigte Ausführungsbeispiel zeigt eine Hochdruckleitung 10", deren axiale Kräfte aufnehmende Schicht 18 mit dem äussersten Layer 14 zusammenfällt. Der Axiallayer 24 weist kontinuierlich Aramidfasern auf, die direkt in das HDPE des äussersten Layers 14 eingebettet sind. Ebenso gut kann/können aber auch ein oder mehrere Prepregbänder aus kontinuierlichen Aramidfasern in einer PEEK-Matrix in das HDPE des äussersten Layers 14 eingebettet sein. Die Aramidfasern sind etwa entlang der Längsachse ausgerichtet, haben also einen Steigungswinkel von etwa 90°. Die druckaufnehmende Schicht 16 ist zwischen dem äussersten Layer 14 und dem innersten Layer 12 angeordnet. Sie weist zwei Drucklayer 20, 20' auf, die aus in PEEK-Matrix eingebetteten kontinuierlichen Kohlefasern bestehen, deren Steigungswinkel etwa 2° beträgt. Durch einen Hochdruckwasserstrahl sind die Zylinderförmigen Drucklayer 20, 20' in Spiralspringfedern geschnitten. Die Drucklayer 20, 20' sind so zueinander angeordnet, dass die Spiralspringfedern einen gegenläufigen Steigungswinkel γ aufweisen. Der Steigungswinkel γ der Spiralspringfedern ist gleich dem Steigungswinkel der Verstärkungsfasern und beträgt ebenfalls etwa 2° bzw. - 2°. Zwecks besserer Anschaulichkeit ist der Winkel in der Zeichnung grösser gewählt.

Mit einer solche Hochdruckleitung 10" können Fluide wie Gas, Öl, Wasser mit Temperaturen bis etwa 90°C aus Tiefen bis zu 2000 bis 3000 Metern gefördert werden. Auf Grund ihrer Drucklayer 20, 20' in Form von Spiralspringfedern ist diese Hochdruckleitung 10" bei gleicher Belastbarkeit bezüglich Druck und Temperatur wie etwa die unter Fig. 1 beschriebene Hochdruckleitung 10 wesentlich flexibler und bei häufigem Transport, also häufigem auf- und abrollen auf bzw. von Trommeln, wesentlich langlebiger.

Über die dargestellten Beispiele hinaus, gibt es noch verschiedene andere Ausgestaltungsformen, mit denen Hochdruckleitungen grosser Länge und geringem Eigengewicht hergestellt werden können. Diese Leitungen kollabieren nicht unter ihrem Eigengewicht und verursachen aufgrund ihrer grösseren Länge geringere Montagekosten. Das Risiko für Leckagen ist wesentlich geringer aufgrund der geringeren Zahl an Verbindungsstellen. Ausserdem besteht keine Gefahr für Korrosionsschäden bei Verletzung des äusseren oder inneren Schutzlayers, da die erfindungsgemässen Hochdruckleitungen keine metallischen Strukturen aufweisen.

**Bezugszeichenliste**
- α: Steigungswinkel der Verstärkungsfasern im Drucklayer
- β: Steigungswinkel der Verstärkungsfasern im Axiallayer
- γ: Steigungswinkel der Spiralspringfeder

- 10: Hochdruckleitung
- 12: innerster Layer
- 14: äusserster Layer
- 16: druckaufnehmende Schicht
- 18: axiale Kräfte aufn. Schicht
- 20: Drucklayer
- 20': Drucklayer
- 22: Längsachse
- 24: Axiallayer
- 24': Axiallayer
- 26: Reibungslayer

## Patentansprüche

1. Flexible Hochdruckleitung, insbesondere Riser zur Förderung von Fluiden aus Unterwasserquellen, mit aneinander anliegenden, konzentrischen Layern (12, 14, 20, 20', 24, 24', 26), die gegeneinander verschiebbar sind, mit je einer Schicht (16, 18) zur Aufnahme von radialen Druckkräften und zur Aufnahme von longitudinal wirkenden Kräften, wobei die Druckkräfte aufnehmende Schicht (16) zumindest einen Drucklayer (20, 20') mit spiralförmig um die Längsachse (22) der Hochdruckleitung verlaufender Struktur aufweist, und wobei der äusserste Layer (14) und der innerste Layer (12) aus flüssigkeitsundurchlässigem Kunststoff bestehen, **dadurch gekennzeichnet, dass** alle Layer (12, 14, 20, 20', 24, 24', 26) ausschliesslich aus Polymermaterial und/oder faserverstärktem Polymermaterial bestehen.

2. Hochdruckleitung nach Anspruch 1, **dadurch gekennzeichnet, dass** in der druckaufnehmenden Schicht (16) ein Drucklayer (20, 20') und in der die axiale Kräfte aufnehmenden Schicht (18) ein Axiallayer (24, 24') je aus faserverstärktem Kunststoff mit vorzugsweise kontinuierlichen Verstärkungsfasern vorgesehen sind.

3. Hochdruckleitung nach Anspruch 2, **dadurch gekennzeichnet, dass** die Verstärkungsfasern des Drucklayers (20, 20') spiralförmig mit einem Steigungswinkel α zwischen 0° und 30°um die Längsachse (22) der Hochdruckleitung gewikkelt sind.

4. Hochdruckleitung nach einem der Ansprüche 1 bis 3, **dadurch gekennzeichnet, dass** die Fasern des Drucklayers (20, 20') Kohlefasern sind und der Kohlefaseranteil vorzugsweise 45% - 65% des Volumens ausmacht

5. Hochdruckleitung nach einem der Ansprüche 1 bis 4, **dadurch gekennzeichnet, dass** die druckaufnehmende Schicht (16) zwei Drucklayer (20, 20') aufweist, wobei die Drucklayer (20, 20') in der Form von Springfedern mit vorzugsweise gegenläufigem, spiralen Drehsinn ausgebildet sind.

6. Hochdruckleitung nach Anspruch 5, **dadurch gekennzeichnet, dass** die Verstärkungsfasern der Drucklayer (20, 20') einen Steigungswinkel α von 0° bis 30°, vorzugsweise 2° aufweisen und der Steigungswinkel γ der Springfedern vorzugsweise gleich dem Steigungswinkel α der Wicklung der Verstärkungsfasern ist.

7. Hochdruckleitung nach einem der Ansprüche 2 bis 6, **dadurch gekennzeichnet, dass** die Verstärkungsfasern des Axiallayers (24, 24') spiralförmig mit einem Steigungswinkel β zwischen 45° und 90° um die Längsachse der Hochdruckleitung gewickelt sind.

8. Hochdruckleitung nach einem der Ansprüche 2 bis 7, **dadurch gekennzeichnet, dass** die Fasern des Axiallayers (24, 14') Glasfasern oder Aramidfasern sind und der Glasfaseranteil bzw. Aramidfaseranteil vorzugsweise 30%-50% des Volumens ausmacht.

9. Hochdruckleitung nach einem der Ansprüche 2 bis 8, **dadurch gekennzeichnet, dass** die Matrix, in der die Verstärkungsfasern der Drucklayer (20, 20') bzw. Axiallayer (24, 24') eingebettet sind, ein Thermoplast, vorzugsweise PE oder PEEK, oder ein Epoxydharz ist

10. Hochdruckleitung nach einem der Ansprüche 2 bis 9, **dadurch gekennzeichnet, dass** die axiale Kräfte aufnehmende Schicht (18) und der äusserste Layer (14) zusammenfallen und der Axiallayer (24, 24') in den äussersten Layer (14) integriert ist, indem die Verstärkungsfasern des Axiallayers (24, 24') direkt oder indirekt in eine flüssigkeitsundurchlässige Polymermatrix, vorzugsweise HDPE, des äussersten Layers (14) eingebettet sind.
